# FASCICULE DE BREVET EUROPEEN

(11) **EP 3 500 879 B1**
(45) Date de publication et mention de la délivrance du brevet: **08.04.2026**
(21) Numéro de dépôt: 17768174.9
(22) Date de dépôt: 18.08.2017
(51) Int. Cl.: G02C 7/10, G02B 1/14, G02B 5/20, G02B 5/28

(54) **LENTILLE OPHTALMIQUE A REVETEMENT MULTICOUCHE REFLECHISSANT ET ANTI-ABRASION, ET SON PROCEDE DE FABRICATION**
BRILLENGLAS MIT EINER REFLEKTIERENDEN ABRIEBFESTEN MEHRLAGIGEN BESCHICHTUNG UND VERFAHREN ZUR HERSTELLUNG DES BESAGTEN GLASES
OPHTHALMIC LENS COMPRISING A REFLECTIVE ANTI-ABRASION MULTILAYER COATING AND PROCESS FOR MANUFACTURING SAID LENS

(30) Priorité: 19.08.2016 FR 1657818
(43) Date de publication de la demande: 26.06.2019
(73) Titulaire: Essilor International, 94220 Charenton-le-Pont (FR)
(72) Inventeur: HENKY, Francis, 94220 Charenton (FR); FRABOULET, Maud, 94220 Charenton (FR)
(74) Mandataire: Plasseraud IP
(86) Numéro de dépôt international: PCT/FR2017/052244
(87) Numéro de publication internationale: WO 2018/033687

(56) Documents cités:
- WO-A1-2008/107325
- WO-A1-2012/173596
- WO-A1-2016/060257
- FR-A1- 2 365 813
- JP-A- 2003 098 309
- JP-A- S56 113 101
- US-B2- 7 055 954

## Description

La présente invention concerne une lentille ophtalmique de type à empilement de couches inorganiques surmontant un substrat et présentant une résistance satisfaisante à l'abrasion, et son procédé de fabrication. L'invention s'applique notamment à une lentille ophtalmique utilisable pour former un verre solaire (correcteur ou non correcteur) et à face avant réfléchissante.

De manière connue, les lentilles ophtalmiques sont constituées d'un substrat en matériau thermoplastique ou thermodurcissable qui est surmonté d'au moins un revêtement multicouche notamment conçu pour conférer à la lentille une résistance satisfaisante aux chocs et aux rayures. Or, la résistance aux rayures de ces revêtements s'avère souvent insuffisante, ce qui est particulièrement critique pour des lentilles formant des verres solaires à faces avant réfléchissantes en comparaison de verres non solaires traditionnels ou antireflets. En effet, la présence de rayures sur les faces avant réfléchissantes de verres solaires est particulièrement perceptible tant par le porteur, chez qui elle peut générer une gêne visuelle, que par un observateur, pour qui ces verres solaires rayés sont alors inesthétiques.

Le document JP-A-2005-292204 divulgue une lentille ophtalmique dont le substrat est revêtu d'un revêtement organique anti-abrasion (« hard-coat layer » en anglais), lui-même recouvert par un revêtement inorganique multicouche qui vise à améliorer l'effet antireflets du côté de la face arrière de la lentille sans pénaliser l'effet réfléchissant en sa face avant. Ce revêtement inorganique est constitué d'un empilement relativement épais d'au moins sept couches, formé d'une alternance de couches de bas indice de réfraction (réalisées en SiO₂) et de couches de haut indice de réfraction (par exemple en Ta₂O₅), avec intercalation optionnelle d'une couche métallique par exemple en Cr. C'est principalement le revêtement anti-abrasion qui confère à la lentille la résistance aux rayures recherchée comme expliqué au § [0026], le revêtement multicouche le surmontant n'étant donc pas conçu pour minimiser l'apparition de rayures sur la face avant de la lentille. Cette résistance aux rayures de la lentille est évaluée de manière visuelle et approximative dans ce document au moyen d'un test dit de laine d'acier (« steel wool » en anglais), avec une évaluation UA dite « presque sans rayure » pour caractériser la résistance à l'abrasion des lentilles testées.

Un inconvénient majeur des lentilles présentées dans ce document réside dans leur épaisseur pouvant être très élevée, pour une résistance aux rayures non précisément quantifiée et pouvant s'avérer insuffisante dans certains cas.

Le document US 7,055,954 B2 divulgue un revêtement inorganique multicouche à face avant réfléchissante pour verre solaire, qui est également constitué d'un empilement alterné de couches de bas indice de réfraction (en SiO₂) et de haut indice de réfraction (en HfO₂). Ce revêtement est conçu pour masquer les rayures apparues et pas pour les éviter. Ce document n'enseigne pas comment minimiser l'apparition de rayures sur cette face avant réfléchissante pour verre solaire.

WO2008/107325 A1 et WO 2016/060257 A montrent tous deux une lentille ophtalmique comprenant un substrat et un revêtement surmontant une couche anti-abrasion recouvrant le substrat, ledit substrat comprenant une alternance de couches de haut indice de réfraction (ZrO2 ou Ta2O5) et de couches de bas indice de réfraction (SiO2).

Un but de la présente invention est donc de proposer une nouvelle lentille ophtalmique qui remédie au moins en partie aux inconvénients précités, notamment en améliorant de manière significative la résistance à l'abrasion de son revêtement inorganique multicouche tout en lui conférant une épaisseur réduite.

Ce but est atteint en ce que la Demanderesse vient de découvrir de manière surprenante qu'une sélection particulière pour un revêtement inorganique multicouche d'au moins deux couches de bas indice de réfraction et d'au moins une couche de haut indice de réfraction empilées en alternance, d'épaisseurs déterminées et déposées suivant des procédés spécifiques, permet d'obtenir à la fois pour ledit revêtement un facteur moyen de réflexion lumineuse Rv dans le visible suffisamment élevé, une épaisseur réduite et une valeur Bayer ISTM de résistance à l'abrasion très élevée, cette lentille étant utilisable pour former un verre solaire à face avant réfléchissante.

Plus précisément, une lentille ophtalmique selon l'invention décrite dans la revendication 1 comprend un substrat ayant une face principale avant et une face principale arrière, la face principale avant étant surmontée d'un revêtement inorganique multicouche qui présente un facteur moyen de réflexion lumineuse Rv dans le visible égal ou supérieur à 4 % et qui est constitué d'un empilement comprenant :
- deux ou trois couches de bas indice de réfraction qui sont chacune constituées d'un premier matériau d'indice de réfraction inférieur à 1,55, le premier matériau étant majoritairement ou exclusivement constitué de SiO₂, et
- une à trois couche(s) de haut indice de réfraction qui est ou sont constituée(s) d'un second matériau d'indice de réfraction supérieur à 1,55 et qui est ou sont localisée(s) entre deux dites couches de bas indice adjacentes dans ledit empilement, le second matériau étant majoritairement ou exclusivement constitué d'un oxyde minéral choisi parmi ZrO₂ et Ta₂O₅,
et la lentille est caractérisée en ce que le revêtement présente une épaisseur inférieure ou égale à 600 nm et une valeur Bayer ISTM de résistance à l'abrasion supérieure à 10.

Selon la présente invention, le facteur moyen de réflexion lumineuse Rv dans le domaine visible est tel que défini dans la norme ISO 13666:1998 et mesuré selon la norme ISO 8980-4 (à un angle d'incidence inférieur à 17°, typiquement de 15°). De manière connue, il s'agit de la moyenne pondérée de la réflexion spectrale sur l'ensemble du spectre visible entre 380 nm et 780 nm. Avantageusement, ce facteur moyen Rv peut être égal ou supérieur à 8 %, voire à 15 %.

Egalement selon la présente invention, ladite valeur Bayer ISTM de résistance à l'abrasion qui caractérise en outre ledit revêtement inorganique multicouche est mesurée selon la norme ISTM 02-002 avec un matériau abrasif Alundum^{®} ZF-12, et avantageusement cette valeur Bayer ISTM dudit revêtement selon l'invention peut être égale ou supérieure à 12, encore plus avantageusement à 14, voire à 15.

Dans la présente description, à moins qu'il n'en soit spécifié autrement :
- l'indication d'un intervalle de valeurs « de X à Y » ou entre « X et Y », dans la présente invention, s'entend comme incluant les valeurs X et Y ;
- l'expression "déposer une couche ou un revêtement" signifie que la couche ou le revêtement est déposé sur la surface à découvert (exposée) de la lentille, i.e. sur la surface la plus éloignée du substrat, étant précisé que par "déposé sur" on entend « surmontant la totalité ou une partie de la surface exposée » (i.e. déposé au-dessus et pas nécessairement au contact de cette surface) ;
- par face arrière (i.e. interne) du substrat, on entend la face (généralement concave) qui, lors de l'utilisation de la lentille ophtalmique, est la plus proche de l'œil du porteur et inversement, par face avant du substrat, on entend la face (généralement convexe) la plus éloignée de cet œil ; et
- toutes les épaisseurs divulguées dans la présente description sont des épaisseurs physiques (i.e. pas des épaisseurs optiques), étant rappelé que l'épaisseur physique d'une couche est par définition égale au quotient de son épaisseur optique par l'indice de réfraction de cette couche (sauf indication contraire, les indices de réfraction auxquels il est fait référence dans la présente description sont exprimés à 25° C pour une longueur d'onde de 550 nm).

On notera qu'un revêtement selon l'invention présente en comparaison des revêtements inorganiques réfléchissants précités de l'art antérieur, d'une part, une épaisseur réduite et donc une sensibilité également réduite aux contraintes mécaniques (e.g. une résistance à la fissuration améliorée) et, d'autre part, une résistance aux rayures nettement améliorée.

On notera également que ce revêtement comprend au moins deux dites couches de bas indice non consécutives dans l'empilement (i.e. dont l'une ne recouvre pas directement l'autre) qui sont reliées l'une à l'autre par ladite au moins une couche de haut indice.

On notera en outre que les valeurs BAYER très élevées obtenues témoignent du fait que ce revêtement de l'invention est apte à minimiser l'apparition de rayures sur ladite face avant. En d'autres termes, ce revêtement permet quasiment à lui seul de s'opposer efficacement à l'apparition de rayures, contrairement aux revêtements inorganiques multicouches antireflets présentés dans le document JP-A-2005-292204 précité. En effet, ces valeurs BAYER n'étaient pas prédictibles au vu des résultats visuels obtenus dans JP-A-2005-292204 par le test « steel wool », du fait des conditions d'abrasion très différentes utilisées pour ce test « steel wool » et pour le test Bayer défini par la norme ISTM 02-002 avec le matériau abrasif Alundum^{®} ZF-12 (on pourra par exemple se référer au document WO 2015/0033182 A1 au nom de la Demanderesse pour des mesures effectuées selon le test « steel wool » et selon un test BAYER ISTM).

Avantageusement, ledit revêtement peut être dépourvu de toute dite couche de bas indice d'épaisseur supérieure ou égale à 225 nm, et/ou de toute dite couche de haut indice d'épaisseur supérieure ou égale à 105 nm.

On notera que cette épaisseur inférieure à 225 nm pour chaque couche de bas indice et/ou cette épaisseur inférieure à 105 nm pour la ou chaque couche de haut indice se distinguent des exemples de revêtements testés dans le document JP-A-2005-292204 précité.

Egalement avantageusement, ledit revêtement inorganique :
- comprend au moins une dite couche de bas indice d'épaisseur comprise entre 100 nm et 200 nm et/ou au moins une dite couche de haut indice d'épaisseur inférieure ou égale à 50 nm, et
- est dépourvu de toute couche métallique d'épaisseur supérieure à 5 nm.

On notera que ce document JP-A-2005-292204 enseignait au contraire dans nombre de ses revêtements testés d'utiliser une couche métallique réalisée en chrome et présentant une d'épaisseur supérieure à 5 nm.

On notera également que ledit revêtement inorganique selon l'invention peut comprendre une ou plusieurs couche(s) mince(s) métallique(s) d'épaisseur inférieure ou égale à 5 nm, utilisée notamment comme promoteur d'adhésion.

Selon l'invention, ledit revêtement surmonte au moins une couche organique anti-abrasion recouvrant ledit substrat.

De préférence, lesdites au moins deux couches de bas indice forment au moins 65 % et à titre encore plus préférentiel de préférence au moins 75 % de l'épaisseur dudit revêtement.

Selon une autre caractéristique de l'invention, celle desdites au moins deux couches de bas indice qui est la plus proche dudit substrat, ou couche proximale de bas indice, peut présenter une surface exposée qui est recouverte par une dite couche de haut indice et qui est exempte du produit d'une réaction entre ledit premier matériau et un bombardement ionique.

On notera que cette surface exposée (i.e. externe) de ladite couche proximale de bas indice ne fait ainsi avantageusement pas l'objet d'un bombardement ionique préalable avant dépôt de la couche de haut indice la recouvrant. Par « bombardement ionique », on entend de manière connue un bombardement par des ions (e.g. des ions argon) d'énergie supérieure ou égale à 30 eV, de préférence à 40 eV, étant précisé qu'il a été vérifié que ce bombardement ionique modifie chimiquement la surface ainsi activée de la couche proximale de bas indice.

En effet, la Demanderesse a découvert de manière inattendue qu'un bombardement ionique (usuellement utilisé pour activer une sous-couche de bas indice en SiO₂ avant d'y déposer une couche de haut indice par exemple en ZrO₂, d'un revêtement multicouche antireflets ou réfléchissant comme décrit dans le document WO 2008/107325 A1), diminue sensiblement le gain en résistance à l'abrasion BAYER ISTM, en comparaison du dépôt de la même couche de haut indice sur la couche de bas indice non soumise à un bombardement ionique. En d'autres termes, une non-activation de la surface exposée de ladite couche proximale de bas indice permet d'augmenter encore la résistance à l'abrasion du revêtement.

On notera également que cette absence d'activation de ladite couche proximale de bas indice permet de maintenir une bonne productivité, du fait que les temps de cycles ne sont pas allongés par l'utilisation d'un tel bombardement ionique.

Avantageusement, ladite couche proximale de bas indice, dont la surface exposée est exempte du produit d'une réaction entre ledit premier matériau et ledit bombardement ionique, peut être la couche la plus interne dudit empilement et peut présenter une épaisseur comprise entre 100 nm et 200 nm.

Selon une autre caractéristique avantageuse de l'invention qui est couplée à cette absence de bombardement ionique de ladite couche proximale de bas indice, cette couche proximale de bas indice (formant de préférence la couche la plus interne de l'empilement) peut être issue du dépôt d'un précurseur dudit premier matériau évaporé dans une enceinte à vide avec un gaz introduit dans ladite enceinte qui est choisi parmi l'argon, le krypton, le néon, l'oxygène et un mélange d'au moins deux de ces gaz et qui est de préférence l'oxygène.

On notera que cette introduction de ce gaz dans l'enceinte d'évaporation pendant le dépôt a pour effet de modifier la porosité de la couche de bas indice ainsi déposée et, combinée à l'absence précitée de bombardement ionique, permet d'améliorer encore la résistance à l'abrasion du revêtement.

Selon un premier mode de réalisation de l'invention, ledit revêtement est à trois couches comprenant successivement, en s'éloignant dudit substrat :
- une dite couche de bas indice interne, d'épaisseur de préférence comprise entre 120 nm et 170 nm,
- une dite couche de haut indice intermédiaire, d'épaisseur de préférence comprise entre 10 nm et 40 nm, et
- une dite couche de bas indice externe, d'épaisseur de préférence comprise entre 20 nm et 40 nm,
ledit revêtement présentant :
* une épaisseur inférieure à 300 nm et de préférence comprise entre 150 nm et 250 nm,
* une épaisseur des couches de bas indice au moins égale à 83 % et de préférence au moins égale à 90 % de l'épaisseur dudit revêtement, et
* un facteur moyen de réflexion lumineuse Rv dans le visible supérieur à 8 %.

On notera que cette épaisseur des couches de bas indice au moins égale à 83 % et de préférence au moins égale à 90 % de l'épaisseur dudit revêtement équivaut à un ratio d'épaisseur couches de bas indice/ couche de haut indice supérieur à 5 et de préférence supérieur ou égal à 10.

Selon un second mode de réalisation de l'invention, ledit revêtement comprend quatre à six couches comprenant successivement, en s'éloignant dudit substrat :
- une dite couche de haut indice interne, d'épaisseur de préférence comprise entre 80 nm et 120 nm,
- une première dite couche de bas indice intermédiaire, d'épaisseur de préférence comprise entre 40 nm et 80 nm,
- une première dite couche de haut indice intermédiaire, d'épaisseur de préférence comprise entre 40 nm et 80 nm,
- optionnellement une seconde dite couche de bas indice intermédiaire, d'épaisseur de préférence comprise entre 80 nm et 120 nm,
- optionnellement une seconde dite couche de haut indice intermédiaire, d'épaisseur de préférence comprise entre 20 nm et 50 nm, et
- une dite couche de bas indice externe, d'épaisseur de préférence comprise entre 200 nm et 240 nm,
ledit revêtement présentant :
* une épaisseur comprise entre 400 nm et 580 nm,
* une épaisseur des couches de bas indice au moins égale à 60 % de l'épaisseur dudit revêtement, et
* un facteur moyen de réflexion lumineuse Rv dans le visible supérieur à 30 %, de préférence égal ou supérieure à 35 %.

On notera que cette épaisseur des couches de bas indice au moins égale à 60 % de l'épaisseur dudit revêtement équivaut à un ratio d'épaisseur couches de bas indice/ couches de haut indice supérieur à 1,55.

Selon l'invention:
- ledit premier matériau est majoritairement (selon une fraction massique de préférence supérieure ou égale à 80 %) ou exclusivement constitué de SiO₂, de préférence de SiO₂ pour la couche la plus interne dudit empilement et de SiO₂ ou d'un mélange SiO₂+Al₂O₃ pour au moins une autre dite couche de bas indice (en particulier de la silice dopée avec de l'alumine, cette dernière contribuant à augmenter la résistance thermique du revêtement), et
- ledit second matériau est majoritairement (selon une fraction massique de préférence supérieure ou égale à 80 %) ou exclusivement constitué d'un oxyde minéral d'au moins un métal de préférence choisi parmi ZrO₂ et Ta₂O₅.

Eventuellement, chaque couche de bas indice peut en outre contenir un ingrédient de haut indice de réfraction, pourvu que l'indice de réfraction global de la couche résultante soit inférieur à 1,55.

Lorsqu'une couche de bas indice comprenant un mélange de SiO₂ et d'Al₂O₃ est utilisée, elle comprend de préférence de 1 à 10 %, et encore plus préférentiellement de 1 à 5 % en masse d'Al₂O₃ par rapport à la masse totale de SiO₂ + Al₂O₃ dans cette couche. Par exemple, SiO₂ dopé avec 4 % ou moins d'Al₂O₃ en masse ou avec 8 % d'Al₂O₃ peuvent être employés. Des mélanges SiO₂/Al₂O₃ disponibles dans le commerce peuvent être utilisés, tels que le LIMA^{®} commercialisé par Umicore Materials AG (indice de réfraction n = 1,48-1,50 à 550 nm), ou la substance L5^{®} commercialisée par Merck KGaA (indice de réfraction n = 1,48 à 500 nm).

De préférence, la couche la plus externe (i.e. distale par rapport au substrat) dudit revêtement inorganique multicouche est à base de silice, comprenant de préférence au moins 80 % en masse de silice comme indiqué ci-dessus et encore plus préférentiellement étant constituée de silice.

Quant à la ou chaque couche de haut indice, elle peut en outre contenir de la silice ou d'autres matériaux de bas indice de réfraction, pourvu que l'indice de réfraction global de la couche résultante soit supérieur à 1,55.

On notera que le choix du nombre de couches pour ledit revêtement inorganique multicouche peut être guidé par les caractéristiques de réflexion recherchées pour ce revêtement, par exemple la valeur de réflexion souhaitée et la chromaticité combinée à l'angle de teinte du reflet.

Un procédé de fabrication selon l'invention d'une lentille ophtalmique telle que définie ci-dessus comprend un dépôt dans une enceinte sous vide desdites au moins deux couches de bas indice et de ladite au moins une couche de haut indice, sans soumettre à un bombardement ionique la surface exposée de celle desdites au moins deux couches de bas indice qui est la plus proche dudit substrat, ou couche proximale de bas indice, avant dépôt d'une dite couche de haut indice la recouvrant.

On notera que ce procédé de l'invention est aisé à mettre en oeuvre et n'a que peu d'impact sur le temps de cycle de fabrication des lentilles, ce qui est particulièrement pertinent dans le cadre d'une production de masse en vue de limiter les coûts et la consommation d'énergie, notamment.

Avantageusement et conformément audit premier mode de réalisation de l'invention, la couche interne pour ledit empilement peut être ladite couche proximale de bas indice qui est directement recouverte par ladite couche de haut indice adjacente sans être soumise au préalable audit bombardement ionique.

Dans ce cas, on peut déposer :
- ladite couche de bas indice interne pour ledit empilement en introduisant dans ladite enceinte un gaz choisi parmi l'argon, le krypton, le néon, l'oxygène et un mélange d'au moins deux de ces gaz, de préférence l'oxygène,
- ladite au moins une couche de haut indice avec ou sans introduction dudit gaz dans ladite enceinte, et
- au moins une autre dite couche de bas indice sans introduire ledit gaz dans ladite enceinte.

De manière générale, le revêtement inorganique multicouche de la lentille ophtalmique selon l'invention peut être déposé sur tout substrat, et de préférence sur des substrats en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC, incluant les homopolycarbonates, les copolycarbonates et les copolycarbonates séquencés), les polyesters tels que le poly(téréphtalate d'éthylène) (PET) ou le poly(téréphtalate de butylène) (PBT) , les copolymères polycarbonates/polyesters, les copolymères de cyclo-oléfines tels que les copolymères éthylène/norbornène ou éthylène/cyclopentadiène et leurs combinaisons, les copolymères thermoplastiques éthylène/acétate de vinyle.

Parmi les matériaux thermodurcissables convenant pour les substrats, on peut citer les polyuréthanes (PU), les poly(thiouréthanes), les (co)polymères d'allylcarbonates de polyols, les polyépisulfures, les polyépoxydes.

D'autres matériaux thermodurcissables convenant pour les substrats sont des (co)polymères de type acryliques dont l'indice de réfraction est compris entre 1,5 et 1,65, typiquement proche de 1,6. Ces (co)polymères acryliques sont obtenus par polymérisation de mélanges de monomères (méth)acrylates et optionnellement de monomères allyliques et/ou vinyl aromatiques. Les monomères (méth)acrylates (i.e. acrylate ou un méthacrylate) peuvent être monofonctionnels ou multifonctionnels, portant typiquement de 2 à 6 groupes (méth)acrylates. Ces monomères peuvent être aliphatiques, cycliques, aromatiques, polyalkoxylés, dérivés de composés tels que le Bisphénol et/ou portant d'autres fonctions telles que des époxy, thioépoxy, hydroxyl, thiol, sulfure, carbonate, uréthane et/ou isocyanate.

Les substrats peuvent être obtenus par polymérisation de mélanges des monomères ci-dessus, ou peuvent encore comprendre des mélanges de ces polymères et (co)polymères.

Les substrats particulièrement recommandés sont les substrats obtenus par (co)polymérisation du bis allyl carbonate du diéthylèneglycol, vendu, par exemple, sous la dénomination commerciale CR-39^{®} par la société PPG Industries (lentilles ORMA^{®} ESSILOR), ou les substrats thermoplastiques de type polycarbonate.

Dans certaines applications, il est préférable que la face principale avant du substrat soit revêtue d'un ou de plusieurs revêtements fonctionnels préalablement au dépôt dudit revêtement inorganique multicouche. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré. Généralement, cette face principale avant du substrat est ainsi revêtue d'une couche de primaire antichoc, d'un revêtement anti-abrasion et/ou anti-rayures, ou d'une couche de primaire antichoc revêtue d'un revêtement anti-abrasion et/ou anti-rayures.

Ledit revêtement inorganique multicouche selon l'invention est de préférence déposé sur un revêtement anti-abrasion et/ou anti-rayures, lequel peut être toute couche classiquement utilisée comme revêtement anti-abrasion et/ou anti-rayures dans le domaine des lentilles ophtalmiques. Ces revêtements résistant à l'abrasion et/ou à la rayure sont de préférence des revêtements durs à base de poly(méth)acrylates ou de silanes comprenant généralement une ou plusieurs charges minérales destinées à augmenter la dureté et/ou l'indice de réfraction du revêtement une fois durci, et ils sont de préférence élaborés à partir de compositions comprenant au moins un alcoxysilane et/ou un hydrolysat de celui-ci, obtenu par exemple par hydrolyse avec une solution d'acide chlorhydrique et optionnellement des catalyseurs de condensation et/ou de durcissement. On peut citer les revêtements à base d'hydrolysats d'époxysilanes tels que ceux décrits dans les documents FR 2702486 (EP 0614957), US 4,211,823 et US 5,015,523.

Une composition pour revêtement anti-abrasion et/ou anti-rayures préférée est celle divulguée dans le document FR 2702486 au nom de la Demanderesse. Elle comprend un hydrolysat d'époxy trialcoxysilane et de dialkyl dialcoxysilane, de la silice colloïdale et une quantité catalytique de catalyseur de durcissement à base d'aluminium tel que l'acétylacétonate d'aluminium, le reste étant essentiellement constitué par des solvants classiquement utilisés pour la formulation de telles compositions. Préférentiellement, l'hydrolysat utilisé est un hydrolysat de γ-glycidoxypropyltriméthoxysilane (GLYMO) et de diméthyldiéthoxysilane (DMDES).

La composition de revêtement anti-abrasion et/ou anti-rayures peut être déposée sur la face principale du substrat par trempage ou centrifugation. Elle est ensuite durcie par la voie appropriée (de préférence thermique, ou UV). L'épaisseur du revêtement anti-abrasion et/ou anti-rayures varie généralement de 2 µm à 10 µm, préférentiellement de 3 µm à 5 µm.

Préalablement au dépôt du revêtement anti-abrasion et/ou anti-rayures, il est possible de déposer sur le substrat un revêtement de primaire (dite aussi couche d'accrochage, « primer » en anglais) améliorant la résistance aux chocs et/ou l'adhésion des couches ultérieures dans le produit final. Ce revêtement peut être toute couche de primaire antichoc classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les documents JP 63-141001 et JP 63-87223, les compositions de primaire poly(méth)acryliques, telles que celles décrites dans le document US 5,015,523, les compositions à base de polyuréthanes thermodurcissables, telles que celles décrites dans le document EP 0404111 et les compositions à base de latex poly(méth)acryliques ou de latex de type polyuréthane, telles que celles décrites dans les documents US 5,316,791 et EP 0680492. Les compositions de primaire préférées sont les compositions à base de polyuréthanes et les compositions à base de latex, en particulier les latex de polyuréthane contenant optionnellement des motifs polyesters. Parmi les compositions de primaire commerciales convenant pour l'invention, on peut citer les compositions Witcobond(R) 232, Witcobond(R) 234, Witcobond(R) 240, Witcobond(R) 242, Neorez(R) R-962, Neorez(R) R-972, Neorez(R) R-986 et Neorez(R) R-9603.

On peut également utiliser dans les compositions de primaire des mélanges de ces latex, en particulier de latex polyuréthane et de latex poly(méth)acrylique.

Ces compositions de primaire peuvent être déposées par trempage ou centrifugation puis séchées à une température d'au moins 70° C et pouvant aller jusqu'à 100° C, de préférence de l'ordre de 90° C, pendant une durée de 2 minutes à 2 heures, généralement de l'ordre de 15 minutes, pour former des couches de primaire ayant des épaisseurs, après cuisson, de 0,2 µm à 2,5 µm, de préférence de 0,5 µm à 1,5 µm.

Avant le dépôt du revêtement inorganique multicouche sur le substrat éventuellement revêtu par exemple d'une couche anti-abrasion, il est possible de soumettre la surface dudit substrat, éventuellement revêtue, à un traitement d'activation physique ou chimique destiné à augmenter l'adhésion du revêtement. Ce pré-traitement est généralement conduit sous vide. Il peut s'agir d'un bombardement avec des espèces énergétiques, par exemple un faisceau d'ions ("Ion Pre-Cleaning" ou "IPC"), d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique).

Les différentes couches du revêtement inorganique multicouche et l'éventuelle sous-couche sont de préférence déposées par dépôt sous vide selon l'une des techniques suivantes:
(i) évaporation, éventuellement assistée par faisceau ionique,
(ii) pulvérisation par faisceau d'ion,
(iii) pulvérisation cathodique, ou
(iv) dépôt chimique en phase vapeur assisté par plasma.

Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

De préférence et comme indiqué ci-dessus, le dépôt de chacune des couches dudit revêtement et de l'éventuelle sous-couche est réalisé par évaporation sous vide.

La lentille ophtalmique de l'invention peut être rendue antistatique, c'est-à-dire ne pas retenir et/ou développer une charge électrostatique appréciable, grâce à l'incorporation d'au moins une couche électriquement conductrice dans ledit revêtement inorganique multicouche. Cette couche électriquement conductrice est de préférence localisée entre deux couches dudit revêtement inorganique, et/ou est adjacente à une couche de haut indice de réfraction de ce revêtement. De préférence, cette couche électriquement conductrice est localisée immédiatement sous une dite couche de bas indice de réfraction et constitue idéalement l'avant dernière couche dudit revêtement en étant localisée immédiatement sous la couche la plus externe (de bas indice, e.g. à base de silice) dudit revêtement.

La couche électriquement conductrice doit être suffisamment fine pour ne pas altérer la transparence dudit revêtement, et elle est de préférence fabriquée à partir d'un matériau électriquement conducteur et hautement transparent. Dans ce cas, son épaisseur varie de préférence de 1 nm à 15 nm, mieux de 1 nm à 10 nm. Cette couche conductrice comprend de préférence un oxyde métallique éventuellement dopé, choisi parmi les oxydes d'indium, d'étain, de zinc et leurs mélanges. L'oxyde d'étain-indium (In₂O₃:Sn pour oxyde d'indium dopé à l'étain), l'oxyde de zinc dopé à l'aluminium (ZnO:Al), l'oxyde d'indium (In₂O₃) et l'oxyde d'étain (SnO₂) sont préférés. Encore plus préférentiellement, cette couche conductrice optiquement transparente est une couche d'oxyde d'étain-indium (« ITO » en abrégé en anglais) ou une couche d'oxyde d'étain.

Une lentille ophtalmique selon l'invention peut également comprendre des fonctionnalités complémentaires telles que, à titre non limitatif :
- des revêtements formés sur la surface externe (i.e. exposée) dudit revêtement inorganique multicouche et capables de modifier ses propriétés de surface, comme par exemple un revêtement externe (« top coat » en anglais) anti-salissures ou antibuée ;
- des fonctionnalités de filtration spécifiques comme par exemple la filtration des UV, du bleu-violet (400 nm - 460 nm) ou des IR, au sein d'un revêtement ou de manière directement intégrée au substrat ; et/ou
- une fonction polarisée.

A titre de revêtements anti-salissures pouvant être typiquement hydrophobes et/ou oléophobes et présentant une épaisseur en général inférieure ou égale à 10 nm, de préférence de 1 nm à 10 nm, mieux de 1 nm à 5 nm, on peut citer des revêtements de type fluorosilane ou fluorosilazane qui peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les documents US 5,081,192, US 5,763,061, US 6,183, 872, US 5,739, 639, US 5,922,787, US 6,337,235, US 6,277,485 et EP 0933377. Une composition de revêtement hydrophobe et/ou oléophobe préférée est commercialisée par Shin-Etsu Chemical sous la dénomination KP 801 M(R). Une autre composition de revêtement hydrophobe et/ou oléophobe préférée est commercialisée par Daikin Industries sous la dénomination OPTOOL DSX(R). Il s'agit d'une résine fluorée comprenant des groupes perfluoropropylène.

Ainsi, une lentille ophtalmique selon l'invention peut par exemple comprendre un substrat successivement revêtu sur sa face principale avant d'une couche de primaire antichoc, d'une couche anti-abrasion et/ou anti-rayures, dudit revêtement inorganique multicouche selon l'invention et d'un revêtement externe hydrophobe et/ou oléophobe.

Quant à la face principale arrière du substrat, elle peut être par exemple revêtue successivement d'une couche de primaire antichoc, d'une couche anti-abrasion et/ou anti-rayures, d'un revêtement antireflet de préférence avec une faible réflexion dans le domaine des UV et d'un revêtement hydrophobe et/ou oléophobe.

D'autres caractéristiques, avantages et détails de la présente invention ressortiront à la lecture de la description suivante de plusieurs exemples de réalisation de l'invention, donnés à titre illustratif et non limitatif, la description étant réalisée en référence aux dessins joints, parmi lesquels :
La figure 1a est une vue schématique en section plane, dans un plan transversal aux faces avant et arrière du substrat, d'un revêtement inorganique à six couches selon l'art antérieur à haut et bas indices de réfraction,
La figure 1b est une vue schématique en section plane dans ledit plan transversal d'un revêtement inorganique à six couches selon l'invention à haut et bas indices de réfraction,
La figure 2a est une vue schématique en section plane dans ledit plan transversal d'un revêtement inorganique bicouche selon l'art antérieur à haut et bas indices de réfraction,
La figure 2b est une vue schématique en section plane dans ledit plan transversal d'un revêtement inorganique à trois couches selon l'invention à haut et bas indices de réfraction,
La figure 3a est une vue schématique en section plane dans ledit plan transversal d'un revêtement inorganique monocouche selon l'art antérieur à haut indice de réfraction,
La figure 3b est une vue schématique en section plane dans ledit plan transversal d'un autre revêtement inorganique à trois couches selon l'invention à haut et bas indices de réfraction, et
La figure 4 est un graphique montrant les valeurs BAYER ISTM de résistance à l'abrasion respectivement obtenues pour les revêtements des figures 1a, 1b, 2a, 2b, 3a, 3b.

### Exemples de réalisation

Les lentilles ophtalmiques employées dans les exemples suivants comprennent un substrat thermoplastique réalisé en un polycarbonate (PC) de dénomination AIRWEAR (ESSILOR) de 65 mm de diamètre, d'indice de réfraction 1,50, de puissance -2,00 dioptries et d'épaisseur 1,2 mm.

On a revêtu ce substrat sur sa face principale avant d'un revêtement anti-abrasion de composition définie dans les gammes suivantes et présentant un extrait sec d'environ 30 % :
- 3-6 % tétraéthoxysilane (TEOS)
- 1-3 % HCl 0,1 N
- 10-20 % γ-glycidoxypropyltriméthoxysilane (GLYMO)
- 1-30 % glycidoxypropylméthyldiéthoxysilane
- 30-40 % d'une dispersion à 30 % en poids de silice colloïdale dans le méthanol
- 10-20 % d'un solvant Dowanol PM
- 1,5 % acetylacétonate d'alumunium (Al(AcAc))
- 0,1 % tensioactif Fluorad FC 430.

Ensuite, on a déposé la ou des couche(s) d'un revêtement inorganique réfléchissant conforme ou non à l'invention par évaporation sous vide dans une enceinte sans chauffage du substrat (source d'évaporation : canon à électrons), puis on a surmonté ce revêtement inorganique d'un revêtement externe hydrophobe de dénomination DSX^{®}.

Le bâti de dépôt était une machine Satis 1200DLF équipée d'un canon à électrons Temescal (8kV) pour l'évaporation des oxydes.

On a contrôlé l'épaisseur de la ou de chaque couche de chaque revêtement inorganique réfléchissant au moyen d'une microbalance à quartz, et l'on a réalisé les mesures spectrales sur un spectrophotomètre à incidence variable Perkin-Elmer Lambda 850 avec un accessoire URA (Universal Reflectance Accessory).

Pour préparer les lentilles ophtalmiques à tester, on a successivement mis en œuvre :
- une étape d'introduction dans une enceinte de dépôt sous vide du substrat revêtu sur sa face avant du revêtement anti-abrasion,
- une étape de pompage jusqu'à l'obtention d'un vide secondaire,
- une étape d'activation de la surface du substrat par un faisceau d'ions argon,
- un arrêt de l'irradiation ionique,
- la formation sur le revêtement anti-abrasion de la ou des couche(s) du revêtement inorganique réfléchissant par évaporations successives, puis
- une étape de ventilation.

Pour tester le revêtement inorganique réfléchissant de chaque lentille ainsi préparée, on a mesuré :
- son facteur moyen de réflexion lumineuse Rv dans le domaine visible défini dans la norme ISO 13666:1998 et mesuré selon la norme ISO 8980-4 à un angle d'incidence de 15°, et
- la valeur Bayer ISTM de résistance à l'abrasion selon la norme ISTM 02-002 avec un matériau abrasif Alundum^{®} ZF-12 (commercialisé par la société Saint-Gobain).

En résumé, le test d'abrasion Bayer ISTM consiste de manière connue à abraser la face principale avant de chaque lentille revêtue en l'exposant à ce matériau abrasif dans un plateau oscillant en translation selon un mouvement de va-et-vient lors de 600 cycles (150 cycles par minute pendant 4 minutes). On mesure les niveaux moyens de trouble (« haze levels » en anglais) avant et après abrasion, en calculant le ratio du trouble mesuré sur une lentille ophtalmique de référence non revêtue sur le trouble mesuré sur la lentille revêtue.

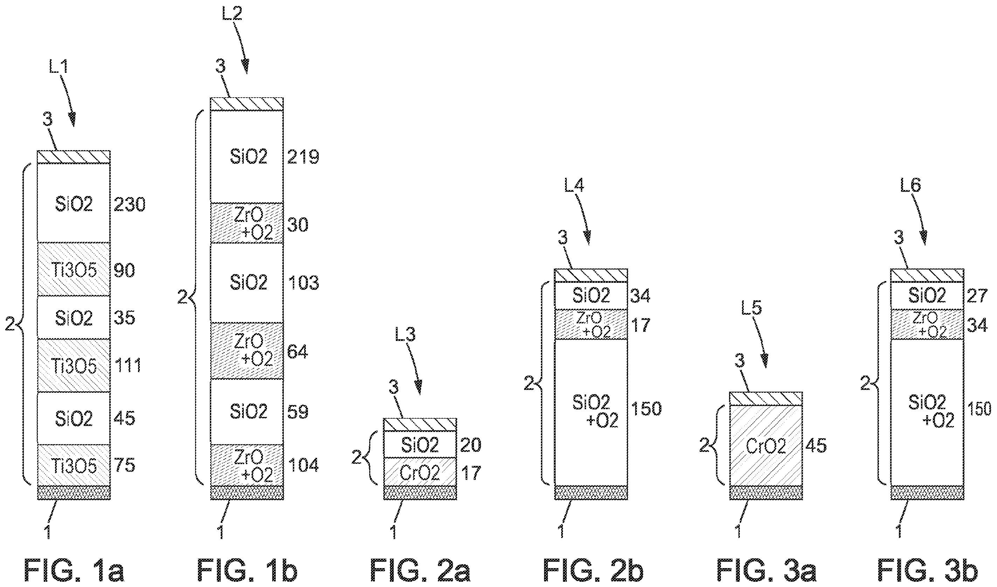

On a testé six lentilles ophtalmiques L1 à L6 qui comprenaient chacune le substrat 1 (PC) pourvu sur sa face principale avant dudit revêtement anti-abrasion, lequel était surmonté d'un revêtement inorganique réfléchissant 2 (non conforme ou conforme à l'invention) déposé par évaporation sous vide et du revêtement externe 3 (en DSX^{®}), parmi lesquelles :
- la lentille L1 selon l'art antérieur schématisée à la figure 1a comprenait à titre de revêtement inorganique réfléchissant 2 un revêtement à six couches déposées par évaporation sous vide sans oxygène dans l'enceinte, formées successivement d'une couche interne de Ti₃O₅ de 75 nm d'épaisseur, d'une couche de SiO₂ de 45 nm d'épaisseur, d'une couche de Ti₃O₅ de 111 nm d'épaisseur, d'une couche de SiO₂ de 35 nm d'épaisseur, d'une couche de Ti₃O₅ de 90 nm d'épaisseur et d'une couche externe de SiO₂ de 230 nm d'épaisseur, et L1 présentait sur sa face avant une lumière réfléchie de couleur émeraude ;
- la lentille L2 selon l'invention schématisée à la figure 1b comprenait à titre de revêtement inorganique réfléchissant 2 un revêtement à six couches formées successivement d'une couche interne de ZrO₂ de 104 nm d'épaisseur, d'une couche de SiO₂ de 59 nm d'épaisseur, d'une couche de ZrO₂ de 64 nm d'épaisseur, d'une couche de SiO₂ de 103 nm d'épaisseur, d'une couche de ZrO₂ de 30 nm d'épaisseur et d'une couche externe de SiO₂ de 219 nm d'épaisseur, ces couches ayant été déposées par évaporation sous vide de ZrO en présence d'oxygène dans l'enceinte pour les couches de ZrO₂ et sans oxygène dans l'enceinte pour les couches de SiO₂, et L2 présentait sur sa face avant une lumière réfléchie de couleur émeraude analogue à celle de la lentille L1 ;
- la lentille L3 selon l'art antérieur schématisée à la figure 2a comprenait à titre de revêtement inorganique réfléchissant 2 un revêtement bicouche formé d'une couche interne de CrO₂ de 17 nm d'épaisseur déposée par évaporation sous vide et d'une couche externe de SiO₂ de 20 nm d'épaisseur déposée par évaporation sous vide, sans oxygène introduit dans l'enceinte pour ces deux couches, et L3 présentait sur sa face avant une lumière réfléchie de couleur argentée ;
- la lentille L4 selon l'invention schématisée à la figure 2b comprenait à titre de revêtement inorganique réfléchissant 2 un revêtement à trois couches formées successivement d'une couche interne de SiO₂ de 150 nm d'épaisseur déposée par évaporation sous vide de SiO₂ en présence d'oxygène dans l'enceinte et non soumise à un traitement de bombardement ionique après son dépôt, d'une couche de ZrO₂ de 17 nm d'épaisseur déposée par évaporation sous vide de ZrO en présence d'oxygène dans l'enceinte, et d'une couche de SiO₂ de 34 nm d'épaisseur déposée par évaporation sous vide sans introduction d'oxygène dans l'enceinte, et L4 présentait sur sa face avant une lumière réfléchie de couleur argentée analogue à celle de la lentille L3 ;
- la lentille L5 selon l'art antérieur schématisée à la figure 3a comprenait à titre de revêtement inorganique réfléchissant 2 une monocouche en CrO₂ de 45 nm d'épaisseur déposée par évaporation sous vide sans introduction d'oxygène dans l'enceinte, et L5 présentait sur sa face avant une lumière réfléchie de couleur argentée intense ; et
- la lentille L6 selon l'invention schématisée à la figure 3b comprenait à titre de revêtement inorganique réfléchissant 2 un revêtement à trois couches formées successivement d'une couche interne de SiO₂ de 150 nm d'épaisseur déposée par évaporation sous vide de SiO₂ en présence d'oxygène dans l'enceinte et non soumise à un traitement de bombardement ionique après son dépôt, d'une couche de ZrO₂ de 34 nm d'épaisseur déposée par évaporation sous vide de ZrO en présence d'oxygène dans l'enceinte, et d'une couche de SiO₂ de 27 nm d'épaisseur déposée par évaporation sous vide sans introduction d'oxygène dans l'enceinte, et L6 présentait sur sa face avant une lumière réfléchie de couleur argentée intense analogue à celle de la lentille L5.

Le tableau 1 ci-dessous détaille les épaisseurs totales e_{T}, les ratios d'épaisseurs couche(s) de bas indice e_{BI} / e_{T}, et les facteurs moyens de réflexion lumineuse Rv dans le domaine visible obtenus pour les revêtements inorganiques réfléchissants 2 respectifs des lentilles L1 à L6.

**Tableau 1 :**

| | L1 | **L2** | L3 | **L4** | L5 | **L6** |
|---|---|---|---|---|---|---|
| e_{T} (nm) | 586 | **579** | 37 | **201** | 45 | **211** |
| e_{BI}/e_{T} (%) | 53 | **66** | 54 | **92** | 0 | **84** |
| Rv (%) | - | **35** | - | **8,5** | - | **15** |

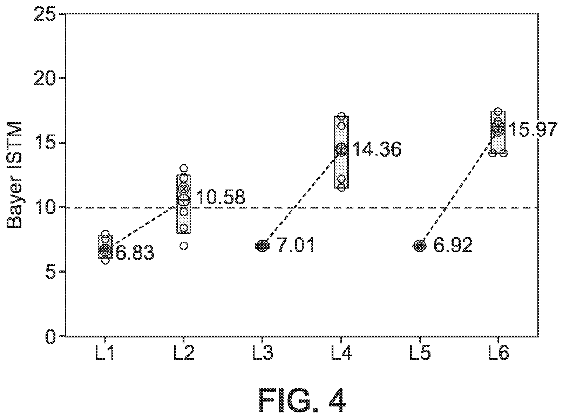

Le graphique de la figure 4 illustre les valeurs moyennes Bayer ISTM de résistance à l'abrasion mesurées selon la norme ISTM 02-002 avec le matériau abrasif Alundum^{®} ZF-12, pour chacune des lentilles L1 à L6.

Cette figure 4 montre que les lentilles L2, L4 et L6 selon l'invention présentent à la fois :
(i) un facteur moyen de réflexion Rv dans le visible élevé (Rv supérieur à 8 pour L4 et L6 et supérieur à 30 pour L2),
(ii) une épaisseur totale réduite (inférieure à 580 nm pour L2 et même inférieure à 220 nm pour L4 et L6), et
(iii) une valeur moyenne Bayer ISTM supérieure à 10 (supérieure à 10,5 pour L2 et même supérieure à 14 pour L4 et sensiblement égale à 16 pour L6).

Ces résultats montrent également qu'un ratio e_{BI} / e_{T} supérieur à 60 % (i.e. une quantité nettement majoritaire de matériau de bas indice tel que la silice dans l'empilement) contribue à améliorer la dureté et la résistance à l'abrasion du revêtement inorganique.

Par ailleurs, on a procédé à un autre essai comparatif démontrant qu'un bombardement ionique par des ions argon de la surface exposée de la couche interne de bas indice (en SiO₂) de L4, qui modifie chimiquement cette surface avant le dépôt (inchangé) des couches de ZrO₂ et de SiO₂, a pour effet négatif de diminuer d'un point de Bayer ISTM le gain en résistance à l'abrasion du revêtement ainsi modifié de L4.

L'effet de synergie selon l'invention entre l'absence de traitement de la surface exposée de la couche interne de bas indice (e.g. en SiO₂) préalablement déposée en présence d'un gaz (e.g. l'oxygène) introduit dans l'enceinte et la couche de haut indice (e.g. en ZrO₂) la recouvrant directement, est ainsi établi.

## Revendications

1. Lentille ophtalmique (L2, L4, L6) formant un verre solaire à face avant réfléchissante, la lentille comprenant un substrat (1) ayant une face principale avant et une face principale arrière, ladite face principale avant étant surmontée d'un revêtement inorganique multicouche (2) qui présente un facteur moyen de réflexion lumineuse Rv dans le visible égal ou supérieur à 4 % et qui est constitué d'un empilement comprenant :
- deux ou trois couches de bas indice de réfraction qui sont chacune constituées d'un premier matériau d'indice de réfraction inférieur à 1,55, le premier matériau étant majoritairement ou exclusivement constitué de SiO₂, et
- une à trois couche(s) de haut indice de réfraction qui est ou sont constituée(s) d'un second matériau d'indice de réfraction supérieur à 1,55 et qui est ou sont localisée(s) entre deux dites couches de bas indice adjacentes dans ledit empilement, le second matériau étant majoritairement ou exclusivement constitué d'un oxyde minéral d'un métal choisi parmi ZrO₂ et Ta₂O₅,
dans laquelle ledit revêtement (2) présente une épaisseur inférieure ou égale à 600 nm et une valeur Bayer ISTM de résistance à l'abrasion supérieure à 10, la valeur Bayer ISTM étant mesurée selon la norme ISTM 02-002 avec un matériau abrasif Alundum^{®} ZF-12,
ledit revêtement étant apte à minimiser l'apparition de rayures sur ladite face avant réfléchissante,
dans laquelle ledit revêtement (2) surmonte au moins une couche organique anti-abrasion recouvrant ledit substrat (1) et est dépourvu de sous-couche, et
dans laquelle lesdites couches de bas indice forment au moins 65 % de l'épaisseur dudit revêtement (2).

2. Lentille ophtalmique (L2, L4, L6) selon la revendication 1, dans laquelle ledit facteur moyen de réflexion lumineuse Rv dans le visible est égal ou supérieur à 8 %.

3. Lentille ophtalmique (L2, L4, L6) selon la revendication 1 ou 2, dans laquelle ledit revêtement (2) est dépourvu de toute dite couche de bas indice d'épaisseur supérieure ou égale à 225 nm, et/ou de toute dite couche de haut indice d'épaisseur supérieure ou égale à 105 nm.

4. Lentille ophtalmique (L2, L4, L6) selon une des revendications 1 à 3, dans laquelle ledit revêtement (2)
- comprend au moins une dite couche de bas indice d'épaisseur comprise entre 100 nm et 200 nm et/ou au moins une dite couche de haut indice d'épaisseur inférieure ou égale à 50 nm, et
- est dépourvu de toute couche métallique d'épaisseur supérieure à 5 nm.

5. Lentille ophtalmique (L2, L4, L6) selon une des revendications précédentes, dans laquelle lesdites au moins deux couches de bas indice forment au moins 75 % de l'épaisseur dudit revêtement (2).

6. Lentille ophtalmique (L2, L4, L6) selon une des revendications précédentes, dans laquelle celle desdites au moins deux couches de bas indice qui est la plus proche dudit substrat (1), ou couche proximale de bas indice, présente une surface exposée qui est recouverte par une dite couche de haut indice.

7. Lentille ophtalmique (L4, L6) selon la revendication 6, dans laquelle ladite couche proximale de bas indice est la couche la plus interne dudit empilement et présente une épaisseur comprise entre 100 nm et 200 nm.

8. Lentille ophtalmique (L4, L6) selon une des revendications précédentes, dans laquelle ledit revêtement (2) est à trois couches comprenant successivement, en s'éloignant dudit substrat (1) :
- une dite couche de bas indice interne,
- une dite couche de haut indice intermédiaire, et
- une dite couche de bas indice externe,
ledit revêtement présentant :
* une épaisseur inférieure à 300 nm,
* une épaisseur des couches de bas indice au moins égale à 83 % de l'épaisseur dudit revêtement, et
* un facteur moyen de réflexion lumineuse Rv dans le visible supérieur à 8 %.

9. Lentille ophtalmique (L4, L6) selon la revendication 8, dans laquelle ledit revêtement (2) comprend successivement, en s'éloignant dudit substrat (1) :
- ladite couche de bas indice interne, d'épaisseur comprise entre 120 nm et 170 nm,
- ladite couche de haut indice intermédiaire, d'épaisseur comprise entre 10 nm et 40 nm, et
- ladite couche de bas indice externe, d'épaisseur comprise entre 20 nm et 40 nm,
ledit revêtement présentant :
* une épaisseur comprise entre 150 nm et 250 nm, et
* une épaisseur des couches de bas indice au moins égale à 90 % de l'épaisseur dudit revêtement.

10. Lentille ophtalmique (L2, L4, L6) selon une des revendications précédentes, dans laquelle ledit premier matériau est constitué de SiO₂ pour la couche la plus interne dudit empilement, et de SiO₂ ou d'un mélange SiO₂+Al₂O₃ pour au moins une autre dite couche de bas indice.

11. Procédé de fabrication d'une lentille ophtalmique (L2, L4, L6) formant un verre solaire selon une des revendications précédentes, **caractérisé en ce que** le procédé comprend un dépôt dans une enceinte sous vide desdites au moins deux couches de bas indice et de ladite au moins une couche de haut indice, sans soumettre à un bombardement ionique la surface exposée de celle desdites au moins deux couches de bas indice qui est la plus proche dudit substrat (1), ou couche proximale de bas indice, avant dépôt d'une dite couche de haut indice la recouvrant.

12. Procédé selon la revendication 11, dans lequel la couche interne pour ledit empilement est ladite couche proximale de bas indice qui est directement recouverte par ladite couche de haut indice adjacente sans être soumise au préalable audit bombardement ionique.

13. Procédé selon la revendication 12, dans lequel on dépose :
- ladite couche de bas indice interne pour ledit empilement en introduisant dans ladite enceinte un gaz choisi parmi l'argon, le krypton, le néon, l'oxygène et un mélange d'au moins deux de ces gaz, de préférence l'oxygène,
- ladite au moins une couche de haut indice avec ou sans introduction dudit gaz dans ladite enceinte, et
- au moins une autre dite couche de bas indice sans introduire ledit gaz dans ladite enceinte.

14. Procédé selon une des revendications 11-13, dans lequel on dépose ledit revêtement (2) sur au moins une couche organique anti-abrasion recouvrant ledit substrat (1), sans pourvoir ledit revêtement (2) d'une sous-couche.

## Patentansprüche

1. Ophthalmische Linse (L2, L4, L6), die ein Sonnenschutzglas mit reflektierender Vorderseite bildet, wobei die Linse ein Substrat (1) mit einer vorderen Hauptseite und einer hinteren Hauptseite umfasst, wobei die vordere Hauptseite mit einer mehrschichtigen anorganischen Beschichtung (2) überzogen ist, die einen durchschnittlichen Lichtreflexionsfaktor Rv im sichtbaren Bereich von 4 % oder mehr aufweist und die aus einem Stapel besteht, der Folgendes umfasst:
- zwei oder drei Schichten mit niedrigem Brechungsindex, die jeweils aus einem ersten Material mit einem Brechungsindex von weniger als 1,55 bestehen, wobei das erste Material überwiegend oder ausschließlich aus SiO₂ besteht, und
- eine bis drei Schicht(en) mit hohem Brechungsindex, die aus einem zweiten Material mit einem Brechungsindex von mehr als 1,55 besteht oder bestehen und die in dem Stapel zwischen zwei benachbarten Schichten mit niedrigem Index angeordnet ist oder sind, wobei das zweite Material überwiegend oder ausschließlich aus einem mineralischen Oxid eines Metalls besteht, das aus ZrO₂ und Ta₂O₅ gewählt ist,
wobei die Beschichtung (2) eine Dicke von 600 nm oder weniger und einen ISTM-Bayer-Wert für die Abriebfestigkeit von mehr als 10 aufweist, wobei der ISTM-Bayer-Wert nach der Norm ISTM 02-002 mit einem abrasiven Material Alundum^{®} ZF-12 gemessen wird,
wobei die Beschichtung in der Lage ist, das Auftreten von Kratzern auf der reflektierenden Vorderseite zu minimieren,
wobei die Beschichtung (2) mindestens eine abriebbeständige organische Schicht überzieht, die das Substrat (1) bedeckt, und frei von einer Unterschicht ist, und
wobei die Schichten mit niedrigem Index mindestens 65 % der Dicke der Beschichtung (2) bilden.

2. Ophthalmische Linse (L2, L4, L6) nach Anspruch 1, wobei der durchschnittliche Lichtreflexionsfaktor Rv im sichtbaren Bereich 8 % oder mehr beträgt.

3. Ophthalmische Linse (L2, L4, L6) nach Anspruch 1 oder 2, wobei die Beschichtung (2) frei von irgendeiner Schicht mit niedrigem Index mit einer Dicke von 225 nm oder mehr und/oder von irgendeiner Schicht mit hohem Index mit einer Dicke von 105 nm oder mehr ist.

4. Ophthalmische Linse (L2, L4, L6) nach einem der Ansprüche 1 bis 3, wobei die Beschichtung (2)
- mindestens eine Schicht mit niedrigem Index mit einer Dicke zwischen 100 nm und 200 nm und/oder mindestens eine Schicht mit hohem Index mit einer Dicke von 50 nm oder weniger umfasst, und
- frei von irgendeiner Metallschicht mit einer Dicke von mehr als 5 nm ist.

5. Ophthalmische Linse (L2, L4, L6) nach einem der vorhergehenden Ansprüche, wobei die mindestens zwei Schichten mit niedrigem Index mindestens 75 % der Dicke der Beschichtung (2) bilden.

6. Ophthalmische Linse (L2, L4, L6) nach einem der vorhergehenden Ansprüche, wobei diejenige der mindestens zwei Schichten mit niedrigem Index, die dem Substrat (1) am nächsten ist, oder die proximale Schicht mit niedrigem Index, eine exponierte Oberfläche aufweist, die von einer Schicht mit hohem Index bedeckt ist.

7. Ophthalmische Linse (L4, L6) nach Anspruch 6, wobei die proximale Schicht mit niedrigem Index die innerste Schicht des Stapels ist und eine Dicke zwischen 100 nm und 200 nm aufweist.

8. Ophthalmische Linse (L4, L6) nach einem der vorhergehenden Ansprüche, wobei die Beschichtung (2) dreischichtig ist, umfassend nacheinander, mit zunehmender Entfernung von dem Substrat (1):
- eine sogenannte innere Schicht mit niedrigem Index,
- eine sogenannte mittlere Schicht mit hohem Index, und
- eine sogenannte äußere Schicht mit niedrigem Index,
wobei die Beschichtung Folgendes aufweist:
* eine Dicke von weniger als 300 nm,
* eine Dicke der Schichten mit niedrigem Index von mindestens 83 % der Dicke der Beschichtung, und
* einen durchschnittliche Lichtreflexionsfaktor Rv im sichtbaren Bereich von mehr als 8 %.

9. Ophthalmische Linse (L4, L6) nach Anspruch 8, wobei die Beschichtung (2) nacheinander, mit zunehmender Entfernung von dem Substrat (1), Folgendes umfasst:
- die innere Schicht mit niedrigem Index mit einer Dicke zwischen 120 nm und 170 nm,
- die mittlere Schicht mit hohem Index mit einer Dicke zwischen 10 nm und 40 nm, und
- die äußere Schicht mit niedrigem Index mit einer Dicke zwischen 20 nm und 40 nm,
wobei die Beschichtung Folgendes aufweist:
* eine Dicke zwischen 150 nm und 250 nm, und
* eine Dicke der Schichten mit niedrigem Index von mindestens 90 % der Dicke der Beschichtung.

10. Ophthalmische Linse (L2, L4, L6) nach einem der vorhergehenden Ansprüche, wobei das erste Material aus SiO₂ für die innerste Schicht des Stapels und aus SiO₂ oder einer Mischung aus SiO₂+Al₂O₃ für mindestens eine andere Schicht mit niedrigem Index besteht.

11. Verfahren zum Herstellen einer ein Sonnenschutzglas bildenden ophthalmischen Linse (L2, L4, L6) nach einem der vorhergehenden Ansprüche, **dadurch gekennzeichnet, dass** das Verfahren ein Abscheiden der mindestens zwei Schichten mit niedrigem Index und der mindestens einen Schicht mit hohem Index in einer Vakuumkammer umfasst, ohne die exponierte Oberfläche derjenigen der mindestens zwei Schichten mit niedrigem Index, die dem Substrat (1) am nächsten ist, oder die proximale Schicht mit niedrigem Index, vor dem Abscheiden einer sie bedeckenden Schicht mit hohem Index einem Ionenbeschuss zu unterziehen.

12. Verfahren nach Anspruch 11, wobei die innere Schicht für den Stapel die proximale Schicht mit niedrigem Index ist, die direkt von der benachbarten Schicht mit hohem Index bedeckt wird, ohne zuvor dem Ionenbeschuss unterzogen zu werden.

13. Verfahren nach Anspruch 12, wobei Folgendes abgeschieden wird:
- die innere Schicht mit niedrigem Index für den Stapel, wobei in die Kammer ein aus Argon, Krypton, Neon, Sauerstoff und einem Gemisch aus mindestens zweien dieser Gase ausgewähltes Gas, vorzugsweise Sauerstoff, eingeleitet wird,
- die mindestens eine Schicht mit hohem Index mit oder ohne Einleitung des Gases in die Kammer, und
- mindestens eine weitere Schicht mit niedrigem Index, ohne das Gas in die Kammer einzuleiten.

14. Verfahren nach einem der Ansprüche 11-13, wobei die Beschichtung (2) auf mindestens einer das Substrat (1) bedeckenden abriebbeständigen organischen Schicht abgeschieden wird, ohne die Beschichtung (2) mit einer Unterschicht zu versehen.

## Claims

1. Ophthalmic lens (L2, L4, L6) forming a sunglass lens having a reflective front face, the lens comprising a substrate (1) having a front main face and a rear main face, said front main face being surmounted by a multilayer inorganic coating (2) that has an average luminous reflectance factor Rv in the visible equal to or higher than 4% and that consists of a stack comprising:
- two or three low-refractive-index layers that each consist of a first material of refractive index lower than 1.55, the first material mostly or exclusively consisting of SiO₂, and
- one to three high-refractive-index layer(s) that consist(s) of a second material of refractive index higher than 1.55 and that is or are located between two said low-index layers that are adjacent in said stack, the second material mostly or exclusively consisting of a mineral oxide of a metal chosen from ZrO₂ and Ta₂O₅,
wherein said coating (2) has a thickness smaller than or equal to 600 nm and a Bayer ISTM abrasion-resistance value higher than 10, the Bayer ISTM value being measured according to standard ISTM 02-002 with an abrasive material Alundum^{®} ZF-12,
said coating being able to minimize the appearance of scratches on said reflective front face,
wherein said coating (2) surmounts at least one abrasion-resistant organic layer covering said substrate (1) and is devoid of underlayer, and
wherein said low-index layers form at least 65% of the thickness of said coating (2).

2. Ophthalmic lens (L2, L4, L6) according to Claim 1, wherein said average luminous reflectance factor Rv in the visible is equal to or higher than 8%.

3. Ophthalmic lens (L2, L4, L6) according to Claim 1 or 2, wherein said coating (2) is devoid of any said low-index layer of thickness larger than or equal to 225 nm, and/or any said high-index layer of thickness larger than or equal to 105 nm.

4. Ophthalmic lens (L2, L4, L6) according to one of Claims 1 to 3, wherein said coating (2)
- comprises at least one said low-index layer of thickness comprised between 100 nm and 200 nm and/or at least one said high-index layer of thickness smaller than or equal to 50 nm, and
- is devoid of any metal layer of thickness larger than 5 nm.

5. Ophthalmic lens (L2, L4, L6) according to one of the preceding claims, wherein said at least two low-index layers form at least 75% of the thickness of said coating (2).

6. Ophthalmic lens (L2, L4, L6) according to one of the preceding claims, wherein that of said at least two low-index layers which is the closest to said substrate (1), or the proximal low-index layer, has an exposed surface that is covered by a said high-index layer.

7. Ophthalmic lens (L4, L6) according to Claim 6, wherein said proximal low-index layer is the most internal layer of said stack and has a thickness comprised between 100 nm and 200 nm.

8. Ophthalmic lens (L4, L6) according to one of the preceding claims, wherein said coating (2) is made up of three layers comprising, in succession, starting from closest to said substrate (1):
- an internal said low-index layer,
- an intermediate said high-index layer, and
- an external said low-index layer,
said coating having:
* a thickness smaller than 300 nm,
* a thickness of the low-index layers at least equal to 83% of the thickness of said coating, and
* an average luminous reflectance factor Rv in the visible higher than 8%.

9. Ophthalmic lens (L4, L6) according to Claim 8, wherein said coating (2) comprises, in succession, starting from closest to said substrate (1):
- said internal low-index layer, of thickness comprised between 120 nm and 170 nm,
- said intermediate high-index layer, of thickness comprised between 10 nm and 40 nm, and
- said external low-index layer, of thickness comprised between 20 nm and 40 nm,
said coating having:
* a thickness comprised between 150 nm and 250 nm, and
* a thickness of the low-index layers at least equal to 90% of the thickness of said coating.

10. Ophthalmic lens (L2, L4, L6) according to one of the preceding claims, wherein said first material consists of SiO₂ for the most internal layer of said stack, and of SiO₂ or of a mixture of SiO₂+Al₂O₃ for at least one other said low-index layer.

11. Process for manufacturing an ophthalmic lens (L2, L4, L6) forming a sunglass lens according to one of the preceding claims, **characterized in that** the process comprises depositing, in a vacuum chamber, said at least two low-index layers and said at least one high-index layer, without subjecting to an ion bombardment the exposed surface of that of said at least two low-index layers which is the closest to said substrate (1), or the proximal low-index layer, before deposition of a said high-index layer that covers it.

12. Process according to Claim 11, wherein the layer that is internal to said stack is said proximal low-index layer, which is directly covered by said adjacent high-index layer without being subjected beforehand to said ion bombardment.

13. Process according to Claim 12, wherein the following are deposited:
- said low-index layer that is internal to said stack while introducing into said chamber a gas chosen from argon, krypton, neon, oxygen and a mixture of at least two of these gases, preferably oxygen,
- said at least one high-index layer with or without introduction of said gas into said chamber, and
- at least one other said low-index layer without introducing said gas into said chamber.

14. Process according to one of Claims 11-13, wherein said coating (2) is deposited on at least one abrasion-resistant organic layer covering said substrate (1), without providing said coating (2) with an underlayer.
